Europäisches Patentamt

European Patent Office

Office européen des brevets

(11) Publication number: **0 101 125**
**A1**

(12) **EUROPEAN PATENT APPLICATION**

(21) Application number: **83201143.1**

(22) Date of filing: **02.08.83**

(51) Int. Cl.³: **G 07 C 9/00**
**G 08 B 3/10**

(30) Priority: **03.08.82 NL 8203092**

(43) Date of publication of application:
**22.02.84 Bulletin 84/8**

(84) Designated Contracting States:
**AT BE DE FR GB IT NL SE**

(71) Applicant: **N.V. Nederlandsche Apparatenfabriek**
**NEDAP**
**Oude Winterswijkseweg 7**
**NL-7141 DE Groenlo(NL)**

(72) Inventor: **Kip, Harm Jacob**
**Frans Halsstraat 16**
**NL-7131 VW Lichtenvoorde(NL)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) A coded responder for an electromagnetic detection system.

(57) A coded responder for an electromagnetic detection
system of the kind comprising a first resonance circuit ($LC_1$)
connected with a switch means (5) controlled by a code
generator (3). The responder is designed so as to be codable
after manufacture. For this purpose it has a second reso-
nance circuit ($LC_2$) coupled with the code generator (3) and
by means of which the desired code can be entered
wirelessly into the code generator (3) after completion of the
production process.

EP 0 101 125 A1

Title: A coded responder for an electromagnetic detection system.

This invention relates to a coded responder for an electromagnetic detection system.

Such a responder, which can be used for detecting persons, animals or goods, is known for example from Netherlands patent application No. 77,11891, which has been laid open to public inspection.

One disadvantage of this prior responder is that the code recorded in it, and by means of which the responder, and hence the bearer of it, can be identified, must necessarily be entered early in the production process. As a consequence, steps have to be taken for the already coded, semi-manufactured products to be kept apart and in the correct sequence during the further production process.

Furthermore, owing to the almost inevitable rejects during the production process, "gaps" are formed in fixed series of codes. Very often these gaps are not known until after the responders have been placed in a housing or possibly embedded in some material. In order to fill such gaps it is then necessary to set up a new production series, which is mostly small and hence inefficient to make.

It is an object of the present invention to avoid the disadvantages outlined by designing the responder in such a manner that coding is possible after complete manufacture. For this purpose, according to the invention, there is provided a coded responder for an electromagnetic detection system, comprising a first resonance circuit connected with a switch means controlled by a code generator, characterized by a second resonance circuit coupled with said code generator and by means of which the desired code can be entered wirelessly into the code generator after completion of the production process.

The invention offers the advantage of the possibility of making a large stock of uncoded responders and coding them on call. Such coding or programming can be effected by the manufacturer, but possibly also by the user, with the possibility of adapting the code to special requirements.

The invention offers the additional advantage that coding can be effected wirelessly, that is to say, without any galvanic contact with the responder circuit. In fact, such galvanic contacts are susceptible to corrosion, in particular in humid environments, and in addition offer    unauthorized persons the possibility of tampering with a responder.

Owing to the wireless programming, therefore, a good code integrity is obtained, which can be enhanced still further by such a design of the responder circuit, as provided in accordance with a further elaboration of the invention, that a code, once entered, cannot be changed any longer.

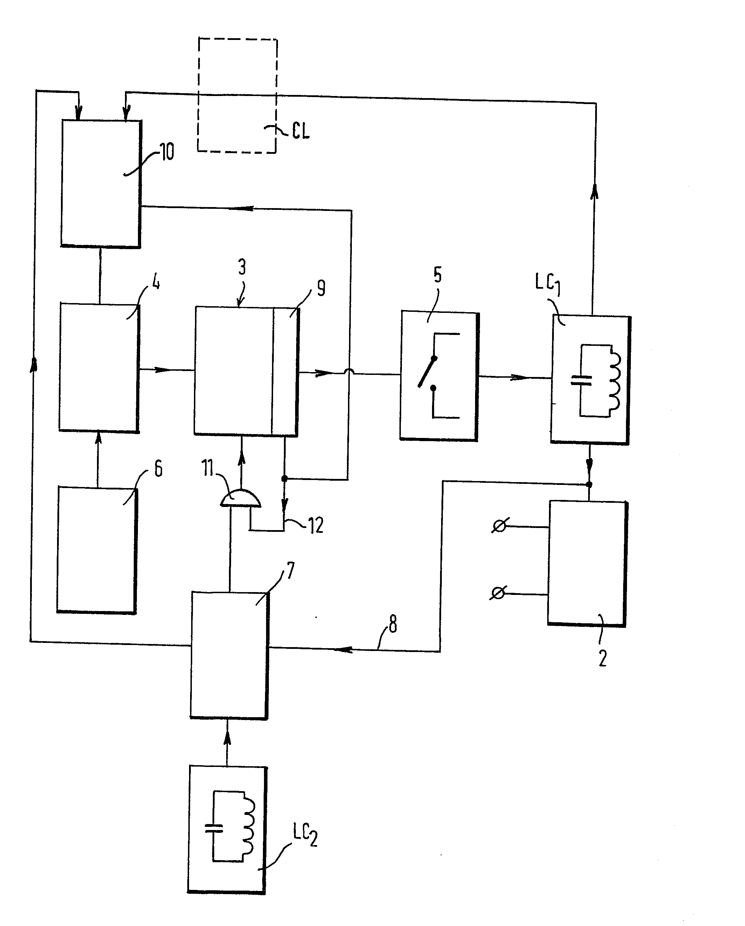

The invention will be described in more detail hereinafter with reference to the accompanying drawing, which shows, in the form of a block diagram, an example of a responder circuit for a responder according to the invention.

The responder circuit shown in the drawing can be built up with commercially available integrated circuits, and the responder circuit thus produced can be placed in a housing and embedded in a suitable casting composition.

The responder circuit comprises a first resonance circuit $LC_1$, having for example a resonance frequency of 120 kHz and which, as is the case with the responder disclosed in Netherlands patent application 77,11891, serves to absorb energy from an interrogation field, and to supply such energy, via a supply circuit 2, which may comprise a rectifying circuit, smoothing capacitors and voltage limiting components, to the supply terminals of other components of the responder circuit.

Furthermore, the voltage prevailing across the resonance circuit $LC_1$, in operation, can be used to supply clockpulses to a code generator circuit 3, in which the code of the responder is stored. For this purpose, in the example shown, there is provided a counter 4 connected to resonance circuit $LC_1$, and actuated by the peaks of the voltage across resonance circuit $LC_1$. Code generator 3 comprises a memory, e.g. a PROM, and the position of counter 4 determines which memory position is read at a given moment.

The output signal of the code generator is supplied to a switching means 5 connected to resonance circuit $LC_1$ and, in the rhythm of the code provided by the code generator, fully or partially short circuiting resonance circuit $LC_1$ or connecting an additional coil or capacitor with resonance circuit $LC_1$. As a result variations arise in the voltage across resonance circuit $LC_1$ in the rhythm of the code stored in the code generator, which variations can be detected wirelessly in known manner.

Counter 4 could also be controlled by a separate oscillator, shown in dotted lines at CL. In that case resonance circuit $LC_1$ need not be connected with the counter.

Connected to the reset input of counter 4 is a reset circuit 6 which each time at the commencement of a code read operation, and when the code generator is coded, resets the counter to its initial position.

For the entry of the desired code into the code generator there is provided a programming circuit 7, connected between code generator 3 and a second resonance circuit $LC_2$, which for example may have a resonance frequency of 5 MHz.

The resonance frequency of the second resonance circuit corresponds to the frequency of a coding device to be placed in the vicinity of the responder.

The voltage across the second resonance circuit during coding opens a gate to a memory position in the code generator, determined by the counter. In addition, in the programming mode of the circuit, the counter input is connected to this voltage via a multiplexer 10, so that this counter can be controlled from the outside (wirelessly).

The code generator may comprise, for example, a matrix of memory elements whose conduction state can be permanently changed by supplying a burst of energy (fusing).

Such memory elements may be, for example, semiconductor elements, such as Zener diodes, which after fusing change into a short circuit or a small resistance. The Zener diodes are then disposed on the intersections of crossing conductors. It is also possible to use so-called fusible links, which after fusing form an open circuit.

The fusing of a given memory element is effected in accordance with the desired code, namely, by means of the energy supplied by the first resonance circuit $LC_1$, so that in the absence of such energy at a given moment no fusing takes place.

In order to prevent unauthorized programming of the responder, use can be made of a key code, which should be transmitted by the coding device and recognized by the responder before the entry of the actual code is possible.

This key code may be programmed, so as to be unalterable, in all responders of a given series during manufacture, but if desired may be entered after manufacture in the manner described above.

In many cases it is of great importance that a code of a responder, once entered, can no longer be altered afterwards. The alteration of a code can be effected, for example, by fusing still more memory elements.

In order to prevent this, a section of the code generator, shown at 9, has been reserved for a locking code, which is entered into the generator after the code proper. The locking code section is connected via a lead 12 to the one input of a gating circuit 11, the other input of which is connected to the programming circuit, with the output being connected to the code generator.

By writing the locking code into the section 9, the voltage at lead 12 is altered, and gating circuit 11 is disabled. This in fact breaks the connection between the programming circuit and the code generator, so that further programming is no longer possible. In addition, this switches the counter input by means of multiplexer 10. In fact, the voltage at lead 12 accordingly determines whether the counter is controlled by signals from $LC_1$ (or block CL) or by signals from $LC_2$.

It is noted that the code entered in the above-described manner is maintained without extra power being required. If a different kind of memory is used, for example a RAM (Random Access Memory) whether or not in combination with a memory of the above-described kind, a permanent source of voltage, in the form of a battery, is in most cases required to maintain the code. RAM circuits which do not require power supply are at present being developed, however, and in future may perhaps be used in a responder of the kind described above.

A combination of a PROM and a RAM circuit in a responder of the kind described offers the possibility of altering the part of the code written in the RAM circuit, with the part of the code written in the PROM circuit being rendered unalterable by means of a locking code in the manner described above. Naturally, in that case, gate 11 should not be present in the connector between the RAM portion of the code generator and the programming circuit.

*****

CLAIMS :


1. A coded responder for an electromagnetic detection system, comprising a first resonance circuit connected with a switch means controlled by a code generator, characterized by a second resonance circuit coupled with said code generator and by means of which the desired code can be entered wirelessly into the code generator after completion of the production process.

2. A coded responder according to claim 1, characterized in that the code generator comprises a PROM circuit.

3. A coded responder according to claim 2, characterized in that the PROM circuit comprises a locking-code section which after being provided with a locking code generates a signal which viaa gating circuit breaks the connection between the second resonance circuit and the PROM circuit.

4. A coded responder according to claim 2 or 3, characterized in that the PROM circuit comprises a matrix of memory elements capable of being fused by means of electrical energy.

5. A coded responder according to claim 4, characterized in that said memory elements are fusible  semiconductor elements.

6. A coded responder according to claim 4, characterized in that said memory elements are Zener diodes disposed at the intersections of crossing conductors and after being fused forming a short circuit or a small resistance.

7. A coded responder according to claim 4, characterized in that said memory elements are fusible links which after being fused form an open circuit.

8. A coded responder according to any one of claims 4-7, characterized in that the energy for fusing a memory element is taken from the first resonance circuit.

9. A coded responder according to any one of claims 1-8, characterized in that the code generator comprises a RAM circuit.

10. A coded responder according to any one of the preceding claims, characterized by said code generator being provided with a fixed key code to be received and recognized by the responder, and by means being provided for preventing the entry of the code proper so long as said key code has not been recognized.

11. A coded responder according to any one of claims 1-9, characterized in that the key code itself can be entered wirelessly into the code generator after the completion of the production process.

0101125

## EUROPEAN SEARCH REPORT

**European Patent Office**

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | EP-A-0 040 544 (TAG RADIONICS LTD.)<br>* Abstract; page 4, lines 1-8; pge 4, line 24 - page 5, line 16; page 6, line 5 - page 7, line 13; page 8, line 21 - page 9, line 7; page 9, line 18 - page 10, line 2; claims 1-3; figures 1,2 * | 1,10, 11 | G 07 C 9/00<br>G 08 B 3/10 |
| A | GB-A-1 555 606 (STIFTELSEN INSTITUTET)<br>* Page 1, line 54 - page 2, line 19; page 2, lines 90-98; figures * | 1,3,9, 10 | |
| A | EP-A-0 017 448 (C.A. WALTON)<br>* Abstract; page 1, lines 25-29; page 9, lines 22-27; page 11, line 9 - page 12, line 14; page 13, lines 5-16; page 17, line 20 - page 18, line 13; figures 1,2 * | 2-5,7 | |
| X | DE-A-2 919 753 (BROWN, BOVERI & CIE., A.G.)<br>* Page 1, claims 1-3; page 2, claims 4-8; page 7, line 18 - page 9, line 11; page 15, line 18 - page 16, line 34; figures * | 1-4,7, 10 | |

**TECHNICAL FIELDS SEARCHED (Int. Cl. 3)**

G 07 C 9/00
A 61 B 5/10
G 07 F 7/08

--- -/-

The present search report has been drawn up for all claims

| Place of search | Date of completion of the search | Examiner |
|---|---|---|
| THE HAGUE | 11-11-1983 | RIEB K.D. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| X | DE-A-2 931 988 (BECKER AUTORADIOWERK GmbH.) * Page 5, line 20 - page 6, line 2; page 7, line 33 - page 8, line 10; figures 1,2 * | 1-3,9-11 | |
| A | US-A-3 702 464 (P.P. CASTRUCCI) * Abstract; column 4, line 61 - column 5, line 55; figures 6,7 * | 4-7 | |
| A | DE-A-2 748 584 (NEDAP) * Pages 1,2, claims 1,11; page 6, line 32 - page 7, line 19; page 8, line 14 - page 9, line 4; figures 1,2 * | 1 | |
| A | US-A-4 129 855 (J.A. RODRIAN) * Abstact; column 3, lines 1-20; column 6, lines 31-66; column 8, lines 14-30; figures 1,4,5 * | 1 | TECHNICAL FIELDS SEARCHED (Int. Cl. ³) |
| A | GB-A-2 028 555 (GEC TRAFFIC AUTOMATION LTD.) * Abstract; page 1, lines 97-114; figures 1-4 * | 1,2,9 | |

The present search report has been drawn up for all claims

| Place of search THE HAGUE | Date of completion of the search 11-11-1983 | Examiner RIEB K.D. |
|---|---|---|